# FASCICULE DE BREVET EUROPEEN

(11) **EP 2 819 891 B1**
(45) Date de publication et mention de la délivrance du brevet: **26.10.2016**
(21) Numéro de dépôt: 13707328.4
(22) Date de dépôt: 21.02.2013
(51) Int. Cl.: B60R 21/268, B60R 21/264, F17C 1/12, F17C 13/00, B60R 21/26, B60R 21/272

(54) **ENCEINTE DE STOCKAGE DE L'HYDROGÈNE**
AUFBEWAHRUNGSGEHÄUSE FÜR WASSERSTOFF
STORAGE CHAMBER FOR HYDROGENE

(30) Priorité: 02.03.2012 FR 1200637
(43) Date de publication de la demande: 07.01.2015
(73) Titulaire: Autoliv Development AB, 447 83 Vårgårda (SE)
(72) Inventeur: ANDERSSON, Ronnie, S43169 Mölndal (SE); JOHANSON, Mats, S-513 93 Fristad (SE); ADERUM, Tobias, S-41470 Göteborg (SE); HORNQUIST, Niclas, S-44831 Floda (SE)
(74) Mandataire: Vigand, Philippe
(86) Numéro de dépôt international: PCT/EP2013/053500
(87) Numéro de publication internationale: WO 2013/127692

(56) Documents cités:
- US-A- 3 912 458
- US-A- 5 016 914
- US-A1- 2005 061 404
- US-A1- 2011 302 933
- US-B1- 7 514 153

## Description

La présente invention concerne de manière générale une enceinte de stockage fiable et disposant d'un temps de vie amélioré.

Il est connu dans l'art antérieur, des enceintes de stockage servant, par exemple, de générateurs de gaz pyrotechniques et hybrides comportant du propergol pour gonfler des airbags. Cependant les propergols sont des produits onéreux, dégageant des effluents et des particules chaudes qu'il faut filtrer. Il est donc intéressant de proposer des enceintes de stockage utilisant une matière première meilleure marché et ne produisant ni particules ni effluents. Il est décrit dans l'art antérieur des enceintes de stockage utilisant de l'oxygène gazeux et de l'hydrogène gazeux qui sont chacun confinés dans une chambre comprenant une paroi en métal ou confinés dans une même réserve de gaz. Un problème de ces enceintes est que l'hydrogène confiné dans la chambre métallique, lorsqu'il est au contact de l'acier, a tendance à se dissocier de sorte qu'il puisse s'échapper par diffusion à travers la paroi en métal pour se recombiner de l'autre côté de la paroi. Les enceintes peuvent perdre de leurs capacités de gonflage et ne plus répondre aux critères de performance spécifiés par les constructeurs. Un tel générateur est décrit dans US 5016914 A.

Le document US 2010/0024926 décrit un métal revêtu d'une couche de protection formée par galvanisation de Zinc pour protéger le métal de l'hydrogène dans le but de d'augmenter la résistance du métal à la fracture retardée. D'un autre côté, le document US 7514153 décrit un procédé de revêtement d'une surface métallique qui consiste à plaquer un alliage Zinc-Nickel sur la surface pour former une protection contre l'hydrogène et donc contre la corrosion évitant la fragilisation par un dégagement d'hydrogène lors de la mise en oeuvre du procédé. Cependant, ces documents concernent avant tout la fragilisation du métal sur lequel est formée la couche protectrice et n'apportent pas de solution au problème d'étanchéité à l'hydrogène décrit plus haut. De plus, ces procédés peuvent donner lieu à des émissions dégradant les soudures qui peuvent être effectuées ultérieurement sur les surfaces traitées.

Un but de la présente invention est de répondre aux inconvénients des documents de l'art antérieur mentionnés ci-dessus et en particulier, tout d'abord, de proposer une enceinte de stockage fiable disposant d'une chambre dont l'étanchéité à l'hydrogène est améliorée.

Pour cela, un premier aspect de l'invention concerne un générateur de gaz pour airbag comprenant une enceinte de stockage incluant au moins une chambre comprenant une paroi en métal et contenant au moins de l'hydrogène gazeux, caractérisée en ce que ladite chambre comprend une couche de revêtement en oxyde de fer disposée sur au moins une portion de surface de la paroi en métal. Ainsi, les atomes d'hydrogène sont empêchés de se diffuser à travers la paroi en métal par la couche de revêtement.

Un second aspect de l'invention concerne l'utilisation d'une couche de revêtement en oxyde de fer dans une enceinte de stockage contenant de l'hydrogène gazeux.

Une réalisation particulièrement intéressante consiste en ce que la couche de revêtement est constituée de Fe₃O₄. Ainsi, la couche de revêtement en plus d'améliorer l'imperméabilité, propose une stabilité améliorée par rapport à d'autres oxydes métalliques, et donne un bel aspect aux pièces ce qui réduit les salissures et nettoyages associés sur les lignes d'assemblage. En outre le revêtement au Fe₃O₄ ne pose pas de problème lorsque la pièce traitée est soudée, par exemple par soudures par friction ou résistance.

Avantageusement, la couche de revêtement est disposée sur la surface intérieure de la paroi en métal. De cette manière, l'hydrogène ne pénètre pas dans la paroi en métal et aucune contamination ni aucune fragilisation n'est provoquée.

Alternativement, la couche de revêtement est disposée à la fois sur la surface intérieure et sur la surface extérieure de la paroi en métal. De cette manière la couche de revêtement peut être réalisée plus facilement en traitant entièrement la pièce en métal, par exemple par trempage. De plus, l'étanchéité est encore améliorée par rapport à une couche unique.

Selon l'invention, l'enceinte de stockage forme un générateur de gaz pour airbag. Ainsi, il est possible d'obtenir un générateur de gaz pour airbag dont l'étanchéité à l'hydrogène est améliorée.

Une réalisation particulièrement intéressante consiste en ce que la couche de revêtement est disposée sur au moins une portion de surface de sorte à limiter la baisse de performance du générateur de gaz à 10% maximum sur une période 15 ans. Ainsi, les coûts peuvent être réduits et le procédé de fabrication de la couche de revêtement est facilité car il n'est pas nécessaire de revêtir les endroits difficiles ou des zones où le traitement serait contre-indiqué pour le besoin d'un assemblage par exemple.

Avantageusement, la chambre contient en outre un gaz inerte. Ainsi, des fuites peuvent être facilement détectées.

Avantageusement, la chambre est composée de deux portions soudées entre elles. Ceci permet de faciliter le procédé de fabrication de l'enceinte de stockage.

De manière avantageuse, la couche de revêtement est disposée sur la totalité de la surface intérieure et/ou extérieure de l'une des deux portions de la chambre. De cette manière, le procédé de fabrication de ladite enceinte peut être encore plus facilité.

Une réalisation particulièrement intéressante consiste en ce que la couche de revêtement a une épaisseur allant de 0,1 µm inclus à 2 µm inclus. Ainsi, une imperméabilité à l'hydrogène peut être assurée en réduisant le volume de l'enceinte de manière négligeable.

Une réalisation encore plus intéressante consiste en ce que la couche de revêtement a une épaisseur allant de 0,1 µm inclus à 0.5 µm inclus. Ainsi, une imperméabilité à l'hydrogène peut être assurée en réduisant le volume de l'enceinte de manière encore plus négligeable.

De manière avantageuse, l'enceinte de stockage est agencée pour stocker l'hydrogène temporairement. Ainsi, une imperméabilité à l'hydrogène peut être assurée même lors d'un passage temporaire de l'hydrogène.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :

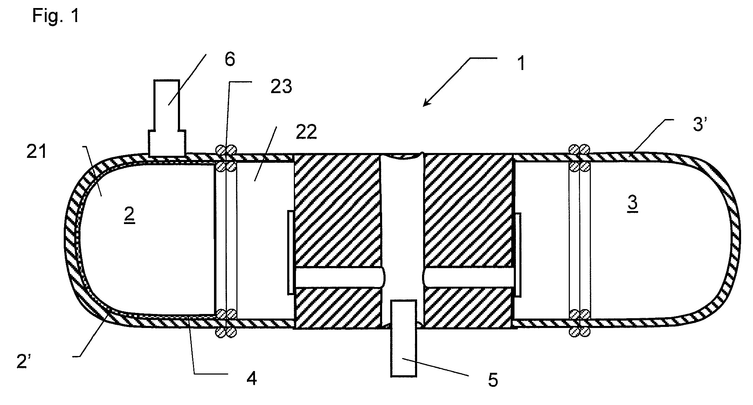

- La figure 1 représente une enceinte de stockage selon le premier aspect de l'invention.

La figure 1 représente, dans cet exemple, une enceinte de stockage 1 consistant en un générateur de gaz pour airbag, comprenant un allumeur 5, une chambre 2 contenant de l'hydrogène et une chambre 3 contenant de l'oxygène chacune comprenant une paroi de confinement en acier 2', 3', de préférence en acier à haute limite élastique conforme à la norme EN1019, emprisonnant le gaz dans la chambre 2, 3 correspondante. Selon un mode de réalisation alternatif non représenté, la chambre 2 peut également contenir un gaz inerte pour détecter d'éventuelles fuites, ou encore de l'oxygène gazeux.

Comme on peut le voir sur la figure 1, la chambre 2 contenant de l'hydrogène est constituée de deux portions 21 et 22 fixées ensemble, au niveau d'une ligne de fixation 23, au moyen d'un soudage par friction, par exemple.

Comme expliqué plus haut, l'hydrogène, au contact de l'acier, a tendance à se dissocier de sorte qu'il puisse s'échapper par diffusion à travers la paroi en métal pour se recombiner de l'autre côté de la paroi. Pour empêcher cela, une surface de la première portion 21 de la chambre 2 est traitée par oxydation noire de sorte à former une couche de revêtement 4 sur la totalité de la surface intérieure de la première portion 21 comme montré sur la figure 1, et donc sur une surface intérieure partielle de la chambre d'hydrogène 2. Alternativement, bien que cela ne soit pas représenté sur la figure, cette couche de revêtement 4 peut être formée à la fois sur la surface intérieure et la surface extérieure de la première portion 21 en plongeant entièrement la pièce traitée, c'est-à-dire la première portion 21, dans un bain, par exemple, suivant la norme DIN-50938.

La couche de revêtement est un oxyde de fer, tel que le Fe₂O₃, ou, de préférence, le Fe₃O₄ qui est plus stable. Tout traitement de surface engendrant un surcout, il peut être utile de ne traiter que la surface nécessaire afin de répondre aux spécifications. La quantité de surface devant être traitée dépend en général de plusieurs facteurs, tels que la quantité de gaz confiné dans la chambre, la pression de stockage du gaz ou encore la forme de la chambre. Malgré cela, il est en général souhaité de traiter la surface de sorte que la baisse de performance du générateur soit inférieure à 10% maximum après 15 ans. De manière idéale, la surface est traitée de sorte que la couche de revêtement a une épaisseur allant de 0,1 µm inclus à 2 µm inclus, préférablement de 0,1 µm inclus à 0,5 µm inclus. Une mesure de l'épaisseur de la couche de revêtement peut être réalisée par microscope à balayage électronique.

La figure 1 représente en plus un goujon 6 fixé, par exemple par soudure par friction ou résistance, sur la chambre 2 revêtue ou pas sans que le revêtement nuise à la soudure. Bien que cela ne soit pas représenté, un autre goujon peut également être fixé sur l'autre chambre 3.

Cependant l'invention ne se limite pas à ce mode de réalisation particulier et l'enceinte de stockage peut, par exemple, consister en une portion d'une pile à combustible, une enceinte destinée au transport d'hydrogène ou encore à des réserves d'hydrogène embarquées sur véhicule pour aide à la propulsion.

Alternativement, il est également possible que l'enceinte de stockage ne soit qu'une enceinte de stockage temporaire, tel qu'un conduit d'amenée afin de supprimer toute perte lors du passage de l'hydrogène dans le conduit.

On comprendra que diverses modifications et/ou améliorations évidentes pour l'homme du métier peuvent être apportées aux différents modes de réalisation de l'invention décrits dans la présente description sans sortir du cadre de l'invention, défini par les revendications annexées, par exemple, l'épaisseur de la couche de revêtement peut être supérieure à une molécule, la couche de revêtement peut être formée ou déposée par d'autres procédés connus.

## Revendications

1. Générateur de gaz pour airbag comprenant une enceinte de stockage (1) incluant au moins une chambre (2) comprenant une paroi en métal (2') et contenant au moins de l'hydrogène gazeux, **caractérisé en ce que** ladite chambre (2) comprend une couche de revêtement (4) en oxyde de fer disposée sur au moins une portion de surface de la paroi en métal, de sorte à empêcher une diffusion d'atomes d'hydrogène à travers la paroi en métal.

2. Générateur de gaz selon la revendication 1, **caractérisé en ce que** la couche de revêtement (4) est constituée de Fe₃O₄.

3. Générateur de gaz selon la revendication 1 ou 2, **caractérisé en ce que** la couche de revêtement (4) est disposée sur la surface intérieure de la paroi en métal (2').

4. Générateur de gaz selon la revendication 1 ou 2, **caractérisé en ce que** la couche de revêtement (4) est disposée à la fois sur la surface intérieure et sur la surface extérieure de la paroi en métal (2').

5. Générateur de gaz selon l'une quelconque des revendications 1 à 4, **caractérisé en ce que** la chambre (2) contient en outre un gaz inerte.

6. Générateur de gaz selon l'une quelconque des revendications 1 à 5, **caractérisé en ce que** ladite chambre (2) est composée de deux portions (21, 22) soudées entre elles.

7. Générateur de gaz selon la revendication 6, **caractérisé en ce que** la couche de revêtement (4) est disposée sur la totalité de la surface intérieure et/ou extérieure de l'une des deux portions (21, 22) de la chambre (2).

8. Générateur de gaz selon l'une quelconque des revendications 1 à 7, **caractérisé en ce que** la couche de revêtement (4) a une épaisseur allant de 0,1µm inclus à 2 µm inclus.

9. Générateur de gaz selon l'une quelconque des revendications 1 à 7, **caractérisée en ce que** la couche de revêtement (4) a une épaisseur allant de 0,1µm inclus à 0.5 µm inclus.

10. Module airbag comprenant un générateur de gaz selon l'une des revendications 1 à 9.

11. Véhicule comprenant un générateur de gaz selon l'une des revendications 1 à 9.

12. Utilisation d'une couche de revêtement (4) en oxyde de fer dans une enceinte de stockage (1) incluant au moins une chambre (2) comprenant une paroi en métal (2') et contenant au moins de l'hydrogène gazeux, ladite chambre (2) comprenant ladite une couche de revêtement (4) en oxyde de fer disposée sur au moins une portion de surface de la paroi en métal, de sorte à empêcher une diffusion d'atomes d'hydrogène à travers la paroi en métal.

## Patentansprüche

1. Gasgenerator für einen Airbag, der ein Aufbewahrungsgehäuse (1) umfasst, das mindestens eine Kammer (2) aufweist, die eine Metallwand (2') umfasst und mindestens gasförmigen Wasserstoff enthält, **dadurch gekennzeichnet, dass** die Kammer (2) einen Überzug (4) aus Eisenoxid umfasst, der auf zumindest einem Oberflächenabschnitt der Metallwand angeordnet ist, damit eine Diffusion von Wasserstoffatomen durch die Metallwand verhindert wird.

2. Gasgenerator nach Anspruch 1, **dadurch gekennzeichnet, dass** der Überzug (4) aus Fe₃O₄ besteht.

3. Gasgenerator nach Anspruch 1 oder 2, **dadurch gekennzeichnet, dass** der Überzug (4) auf der Innenfläche der Metallwand (2') angeordnet ist.

4. Gasgenerator nach Anspruch 1 oder 2, **dadurch gekennzeichnet, dass** der Überzug (4) sowohl auf der Innenfläche als auch auf der Außenfläche der Metallwand (2') angeordnet ist.

5. Gasgenerator nach einem der Ansprüche 1 bis 4, **dadurch gekennzeichnet, dass** die Kammer (2) ferner ein Inertgas enthält.

6. Gasgenerator nach einem der Ansprüche 1 bis 5, **dadurch gekennzeichnet, dass** die Kammer (2) aus zwei miteinander verschweißten Abschnitten (21, 22) aufgebaut ist.

7. Gasgenerator nach Anspruch 6, **dadurch gekennzeichnet, dass** der Überzug (4) auf der gesamten Innenfläche und/oder Außenfläche von einem der beiden Abschnitte (21, 22) der Kammer (2) angeordnet ist.

8. Gasgenerator nach einem der Ansprüche 1 bis 7, **dadurch gekennzeichnet, dass** der Überzug (4) eine Dicke von einschließlich 0,1 µm bis einschließlich 2 µm aufweist.

9. Gasgenerator nach einem der Ansprüche 1 bis 7, **dadurch gekennzeichnet, dass** der Überzug (4) eine Dicke von einschließlich 0,1 µm bis einschließlich 0,5 µm aufweist.

10. Airbagmodul, das einen Gasgenerator nach einem der Ansprüche 1 bis 9 umfasst.

11. Fahrzeug, das einen Gasgenerator nach einem der Ansprüche 1 bis 9 umfasst.

12. Verwendung eines Überzugs (4) aus Eisenoxid in einem Aufbewahrungsgehäuse (1), das mindestens eine Kammer (2) aufweist, die eine Metallwand (2') umfasst und mindestens gasförmigen Wasserstoff enthält, wobei die Kammer (2) den Überzug (4) aus Eisenoxid umfasst, der auf zumindest einem Oberflächenabschnitt der Metallwand angeordnet ist, damit eine Diffusion von Wasserstoffatomen durch die Metallwand verhindert wird.

## Claims

1. Gas generator for an airbag comprising a storage enclosure (1) including at least one chamber (2) comprising a metallic wall (2') and containing at least gaseous hydrogen, **characterized by** that this chamber (2) comprises a covering layer (4) of iron oxide arranged on at least a part of the surface of the metallic wall in such a manner as to prevent a diffusion of hydrogen atoms through the metallic wall.

2. Gas generator according to Claim 1, **characterized by** that the covering layer (4) is constituted by Fe₃O₄.

3. Gas generator according to Claim 1 or 2, **characterized by** that the covering layer (4) is arranged on the inner surface of the metallic wall (2').

4. Gas generator according to Claim 1 or 2, **characterized by** that the covering layer (4) is arranged simultaneously on the inner surface and on the outer surface of the metallic wall (2').

5. Gas generator according to any one of Claims 1 to 4, **characterized by** that the chamber (2) also contains an inert gas.

6. Gas generator according to any one of Claims 1 to 4, **characterized by** that this chamber (2) is composed by two parts (21, 22) welded together.

7. Gas generator according to Claim 6, **characterized by** that the covering layer (4) is arranged on the entire inner and/or outer surface of one of the two parts (21, 22) of the chamber (2).

8. Gas generator according to any one of Claims 1 to 7, **characterized by** that the covering layer (4) has a thickness ranging from including 0.1 µm to and including 2 µm.

9. Gas generator according to any one of Claims 1 to 7, **characterized by** that the covering layer (4) has a thickness of including 0.1 µm to and including 0.5 µm.

10. Airbag module comprising a gas generator according to one of Claims 1 to 9.

11. Vehicle comprising a gas generator according to one of Claims 1 to 9.

12. Use of a covering layer (4) of iron oxide in a storage enclosure (1) including at least one chamber (2) comprising a metallic wall (2') and containing at least gaseous hydrogen, which chamber (2) comprises this one covering layer (4) of iron oxide arranged on at least one part of the surface of the metallic wall in such a manner as to prevent a diffusion of hydrogen atoms through the metallic wall.
